# EUROPÄISCHE PATENTANMELDUNG

(11) **EP 0 616 438 A1**
(43) Veröffentlichungstag der Anmeldung: **21.09.1994**
(21) Anmeldenummer: 94104112.1
(22) Anmeldetag: 16.03.1994
(51) Int. Cl.: H04B 7/24

(54) **System zur Kommunikation zwischen Sende-Empfangs-Stationen eines Nachrichtenübertragungsnetzes deren Empfangsstrahler winkelsynchron rotierende Richtstrahlen sind**

(30) Priorität: 16.03.1993 DE 4308254; 07.04.1993 DE 4311472; 06.08.1993 DE 4326434
(71) Anmelder: Horn, Wolfgang, Dipl.-Ing., D-81671 München (DE)
(72) Erfinder: Horn, Wolfgang, Dipl.-Ing., D-81671 München (DE)
(74) Vertreter: Schmidt-Evers, Jürgen, Dipl.-Ing.

(57) **Zusammenfassung**

Ein System zur Kommunikation zwischen Sende-Empfangssystemen eines Nachrichten-Übertragungsnetztes umfaßt mehrere Sende-Empfangsstationen (A, B, C), deren Empfangsstrahler Richtstrahlen sind, die allesamt winkelsynchron rotieren. Jeder Station ist ein Speicher zugeordnet, in dem das Ablaufschema der synchronen Rotation und die Daten der momentanen Standorte der einzelnen Stationen (A, B, C) gespeichert sind. Zwei Stationen kommunizieren nur dann, wenn das rotierende Richtdiagramm (R) der empfangenden Station auf die Sendestation ausgerichtet ist.

## Beschreibung

Die Erfindung betrifft ein System zur Kommunikation zwischen Sende-Empfangs-Stationen eines Nachrichten-Übertragungsnetztes.

Bei Nachrichten-Übertragungsnetzen mit mehreren an verschiedenen Orten aufgestellten Sende-Empfangs-Stationen ist es aus verschiedenen Gründen erstrebenswert, daß für die Nachrichtenübertragung möglichst geringe Energie benötigt wird. So ist es beispielsweise bei Kurzwellen-Nachrichten-Übertragungsnetzen wünschenswert, daß der Sender der Sendestation mit möglichst geringer Hochfrequenzleistung eine sichere und störungsfreie Nachrichtenübertragung zur jeweiligen Empfangsstation gewährleistet.

Aus "Funküberwachung und elektronische Kampfführung", Franckh'sche Verlagshandlung, Stuttgart 1986, S.160 ff von Rudolf Grabau sind beispielsweise Empfangsstationen mit elektronisch rotierbarem Richtdiagramm bekannt. Wenn zwischen zwei Stationen konkret vereinbart ist, wann sie eine Verbindung aufbauen wollen, so erfolgt dies in einfacher Weise dadurch, daß die Sende- und Empfangsstrahler aufeinander ausgerichtet werden. Wenn jedoch eine Station eine andere anrufen will, die davon nichts weiß, ist ein Verbindungsaufbau sehr schwierig, da in der Regel die Sende- und Empfangsstrahler nicht aufeinander ausgerichtet sind. Bei den bisher bekannten Nachrichten-Übertragungsnetzen mit an verschiedenen Orten aufgestellten Sende-Empfangsstationen kann daher der Aufbau einer Verbindung sehr lange dauern, und die Zeit für einen Verbindungsaufbau ist nicht kalkulierbar.

Es ist daher Aufgabe der Erfindung, ein System der eingangs genannten Art zu schaffen, das eine sichere und störungsfreie Nachrichtenübertragung mit optimalem Wirkungsgrad zwischen zwei Stationen ermöglicht. Diese Aufgabe wird gelöst durch ein System laut Anspruch 1.

Das erfindungsgemäße Kommunikationssystem gewährleistet, daß der Sender einer Sendestation nur dann eine Nachricht ausstrahlt, wenn der Empfangsrichtstrahler der Empfangsstation, mit dem die Sendestation kommunizieren will, auf diese Sendestation ausgerichtet ist. Aufgrunddessen wird die Nachricht mit optimalem Wirkungsgrad und geringst möglicher Sendeleistung störungsfrei übertragen.

Ein erfindungsgemäßes System eignet sich nicht nur zur Kommunikation zwischen zwei bereits ausgewählten Stationen, sondern ist vor allem auch zum Aufbau einer solchen Kommunikationsverbindung geeignet, wie diese beispielsweise bei Fernverkehrsverbindungen über Kurzwelle nötig ist. Wie zuvor beschrieben, ist ein Verbindungsaufbau zwischen zwei Funkstationen eines Kurzwellen-Funknetzes sehr schwierig, wenn eine Funkstation eine andere anrufen will, ohne daß diese von dem Anruf etwas weiß. Die Empfangs-Richtantenne der gerufenen Station wird wahrscheinlich in eine andere Richtung gedreht sein und möglicherweise wird die gerufene Station gerade selbst senden und so den Anruf überhören. Es Kann auch vorkommen, daß zwei Stationen gleichzeitig und ohne Kenntnis voneinander versuchen, eine dritte Station anzurufen, so daß sich bei der angerufenen Station beide Anrufe überlagern und gegenseitig stören. Bei den bisher bekannten Kurzwellen-Verbindungssystemen kann deshalb der Aufbau einer Verbindung oftmals sehr lange dauern und die Zeit eines Verbindungsaufbaus ist nicht kalkulierbar.

Dieses Problem wird ausgehend von einem System laut Hauptanspruch gemäß den Unteransprüchen 2 bis 9 gelöst, durch diese Ergänzung wird ein System zum Aufbau von Kurzwellenverbindungen geschaffen, das auch ohne vorherige Zeitvereinbarung zwischen Zwei Stationen einen schnellen und sicheren Verbindungsaufbau ermöglicht. Bei diesem erfindungsgemäßen System nach den Ansprüchen 2 bis 9 sind alle Stationen stets empfangsbereit und zwar mit Empfangs-Richtantennen, die einen großen Signal/Störabstand und einen hohen Gewinn gewährleisten. Damit kann jederzeit auch eine Kurzwellenverbindung mit einer Funkstation aufgebaut werden, die im Moment vom Wunsch einer anderen Station nach Verbindungsaufbau keine Kenntnis hat. Dies ist in kürzester Zeit und infolge der Richtwirkung der Empfangsantennenen auch sehr sicher durchführbar, indem jede Station das Richtdiagramm ihrer Empfangsantenne in einem allen anderen Stationen bekannten Ablaufschema über den Azimut rotieren läßt, so daß jede Station aus der Kenntnis ihrer eigenen geographischen Position und der Position der anzurufenden Station den Großkreis auf der Erdkugel bestimmen kann, der beide Stationen passiert, aufgrund der Kenntnis des Ablaufschemas, nach dem die anzurufende Station ihre Antenne in verschiedene Richtungen richtet, den Zeitpunkt ermittelt, zu dem die Empfangsantenne auf die rufende Station gerichtet sein wird, und zu diesem Zeitpunkt ihren Anruf sendet. In diesem Moment wird die Richtwirkung der Empfangsantenne der angerufenen Station den Empfangspegel dieses Anrufes verstärken, während sie die Pegel von Sendungen aus anderen Richtungen bedämpft. Durch den so gewonnenen höheren Störabstand können Kurzwellenverbindungen über große Entfernungen schnell und sicher aufgebaut und anschließend zum Kommunikationsaustausch zwischen den Stationen betrieben werden.

Nach Aufbau einer Verbindung kann der eigentliche Kommunikationsbetrieb gegebenenfalls auch über übliche Sende- und Empfangs-Richtantennen durchgeführt werden, indem jede Station sowohl ihre Sende- als auch Empfangs-Richtantenne, beispielsweise breitbandige logarithmisch periodische Antennen, jeweils auf die Gegenstation (vorbestimmter Azimutwinkel gegenüber Nord) ausrichtet.

Das erfindungsgemäße System nach Hauptanspruch ist auch besonders gut geeignet zur Kommunikation zwischen Fahrzeugen, beispielsweise zwischen fahrerlosten Transportfahrzeugen in Werkshallen oder auf einem Werksgelände. Seitdem solche fahrerlosen Transportfahrzeuge und andere bewegliche Roboter in Werkshallen und in Gebäuden eingesetzt werden, besteht ein dringender Bedarf nach kostengünstigen Kommunikationssystemen hierfür, um die Fahrzeuge bedarfsgerecht einzusetzen, ihre Bewegung zu kontrollieren und bei Änderung der Wegverhältnisse umlenken zu können.

Auch zu diesem Zweck ist gemäß einer Weiterbildung der Erfindung das erfindungsgemäße System nach den Unteransprüchen 10 bis 25 geeignet.

Das erfindungsgemäße Kommunikationssystem benutzt zum Datenaustausch zwischen den Fahrzeugen eine unmittelbare Sichtverbindung mittels Richtstrahler, vorzugsweise wird hierzu als Übertragungsmedium Licht benutzt. Die synchron miteinander rotierenden Richtstrahler gewährleisten eine Übertragung mit optimalem Wirkungsgrad, da die Sende-Richtstrahler nur dann eine Nachricht ausstrahlen, wenn sie auf ein Fahrzeug ausgerichtet sind, mit dem sie kommunizieren sollen, die Sendeleistung wird daher optimal ausgenutzt und zur Nachrichtenübertragung wird eine Richtstrecke benutzt. Dazu ist es nur nötig, daß jedes Fahrzeug weiß, in welcher Richtung die anderen Fahrzeuge zu ihm jeweils stehen. Diese Richtungsinformationen können über vorhergehende Pilotsendungen, mit denen jedes Fahrzeug seine Kennung abstrahlt, gewonnen und gespeichert werden, es hat sich jedoch als besonders vorteilhaft erwiesen, hierfür ein Navigationssystem nach Unteranspruch 6 zu benutzen, mit welchem über die gleiche Richtstrahleranordnung, die zur Kommunikation benutzt wird, durch Peilung der Standort der einzelnen Fahrzeuge ermittelt wird, der dann von den einzelnen Fahrzeugen zu den anderen Fahrzeugen übermittelt und dort in den Speichern abgelegt wird. Das erfindungsgemäße Kommunikationssystem ist nicht auf die Verwendung für fahrerlose Fahrzeuge in einem begrenzten Gelände beschränkt, sondern kann beispielsweise auch für Mikrowellen-Sichtkontakt-Verbindungen auf Schiffen oder anderen Fahrzeugen eingesetzt werden, da diese spezielle Art der synchronen Rotation von Richtstrahlantennen gewährleistet, daß eine Sende-Richtstrahlantenne immer auf die Empfangsrichtstrahlantennen des jeweils ausgewählten anderen Fahrzeugs ausgerichtet ist und damit mit geringstmöglicher Leistung sicher Nachrichten übertragen werden können.

Unter "Rotieren" wird gemäß der Erfindung sowohl das mechanische Drehen der Richtstrahler um eine Drehachse verstanden, als auch die nur simulierte Drehung eines Richtstrahles durch aufeinanderfolgendes Aktivieren von mehreren auf einem Kreis angeordneten feststehenden Richtstrahlern. Dies gilt sowohl für den Senderichtstrahler, als auch für den Emprangsrichtstrahler und sowohl für das Medium Licht als auch für Mikrowellen.

Eine Richtstrahlanordnung mit mechanisch rotierenden Richtstrahlern bedingt Rotationseinrichtungen mit relativ großen umlaufenden Massen. Vor allem bei Ausbildung der Richtstrahler als Mikrowellen-Richtstrahler, bei denen zur Speisung der im Brennpunkt der Parabolreflektoren angeordneten elektrischen Strahler zusätzliche drehbare Speiseleitungsverbindungen nötig sind, werden solche rotierenden Doppelrichtstrahl-Anordnungen sehr aufwendig und teuer. Da für höhere Frequenzen von beispielsweise 1 bis 18 GHz solche Drehkupplungen nicht mehr breitbandig zur Verfügung stehen, wird auch der Anwendungsbereich stark eingeschränkt. Außerdem ist keine einfache Möglichkeit zur Verstellung der Elevation der in horizontaler Richtung abstrahlenden Richtstrahler möglich, was bei manchen Anwendungsfällen wiederum einschränkend ist.

Diese Nachteile beseitigt eine rotierende Doppelrichtstrahl-Anordnung nach den Unteransprüchen 23 bis 25. Hierbei werden nicht mehr die Richtstrahler selber gedreht, sondern nur noch ein zwischen diesen angeordneter schräggestellter Reflektor, der je nach Anwendungsfall mit relativ geringem Gericht herstellbar ist, so daß der mechanische Aufwand für die Drehvorrichtung gering gehalten werden kann. Wegen der geringen Masse des Reflektors sind auch sehr große Umlaufgeschwindigkeiten erreichbar. Diese erfindungsgemäße Doppelrichtstrahl-Anordnung eignet sich wiederum sowohl für Richtstrahler mit Licht, besonders vorteilhaft ist sie jedoch für Mikrowellen-Richtstrahler, da durch die feststehende Anordnung der Richtstrahler die elektrische Speisung sehr vereinfacht wird und Drehkupplungen überflüssig werden. Eine erfindungsgemäße Mikrowellen-Doppelrichtstrahl-Anordnung kann daher auch breitbandig arbeiten, da übliche zweikanalige Speisesysteme eingesetzt werden können. Der Reflektor ist im einfachsten Fall ein beidseitig reflektierender ebener Spiegel. In speziellen Fällen könnte der Reflektor auch als doppelseitiger Parabolspiegel ausgebildet sein, durch den spezielle Richtstrahldiagramme erzeugt werden können.

Eine erfindungsgemäße Doppelrichtstrahl-Anordnung besitzt darüber hinaus noch den Vorteil, daß die Elevation der in entgegengesetzten Richtungen abgestrahlten horizontalen Richtstrahlen auf sehr einfache Weise einstellbar ist, indem der Winkel des Reflektors gegenüber seiner Drehachse verstellt wird, was während der Rotation kontinuierlich gesteuert möglich ist. Wenn die beiden feststehend angeordneten Richtstrahler beispielsweise auf einem nicht lotrechten hast eines Fahrzeugs, beispielsweise eines Schiffes, angeordnet sind oder sich während des Betriebes die Vertikalachse des Richtstrahlsystems verändert, so läßt sich diese damit verbundene Elevationsänderung sehr schnell und einfach durch entsprechendes Kippen des schräg stehenden Reflektors kompensieren.

Die erfindungsgemäße rotierende Doppelrichtstrahl-Anordnung mit feststehenden Richtstrahlern und nur rotierendem Reflektor dazwischen eignet sich nicht nur für ein Kommunikationssystem nach den Ansprüchen 10 bis 22, sondern ist in gleicher Weise auch für andere Zwecke geeignet, beispielsweise für Funkerfassungs- oder Radaranlagen. Bei Funkerfassungs-Anlagen, die mit einer rotierenden Parabolantenne arbeiten, könnte eine erfindungsgemäße Doppelrichtstrahlantenne benutzt werden, mit welcher jeweils nach einem halben Antennenumlauf von der einen auf die andere Antenne umgeschaltet wird. Dadurch könnte die Erfassungswahrscheinlichkeit einer solchen Funkerfassungsanlage verdoppel werden. Auch bei Nahbereichs-Radaranlagen könnte die erfindungsgemäße Doppelrichtstrahl-Anordnung benutzt werden, ein gemeinsamer Sender könnte über beide Parabolantennen abstrahlen und die Echos würden über die beiden Parabolantennen getrennt ausgewertet, so daß auch hier die Erfassungswahrscheinlichkeit einer solchen Radaranlage verdoppelt werden kann.

Die Erfindung wird im folgenden anhand schematischer Zeichnungen an Ausführungsbeispielen näher erläutert.

Fig. 1 bis 3 zeigen die Anwendung des erfindungsgemäßen Systems zum Aufbau einer Weitverkehrs-Kurzwellenverbindung.

Fig. 4 bis 10 zeigen die Anwendung des erfindungsgemäßen Systems zur Kommunikation zwischen fahrerlosen Fahrzeugen auf einem Werksgelände.

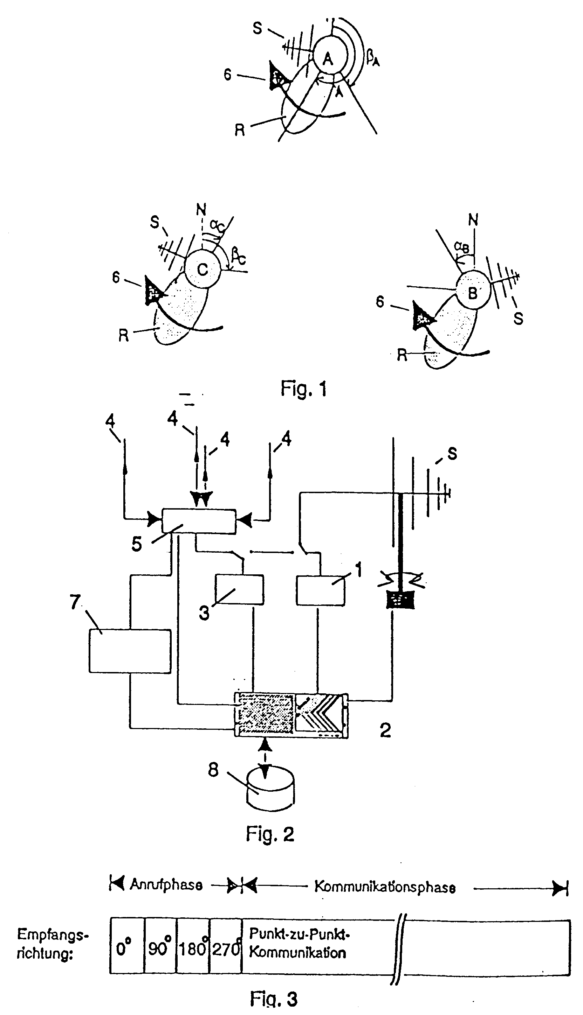

Fig. 1 zeigt ein Kurzwellen-Funknetz bestehend aus drei Sende-Empfangsstationen A, B und C, die einige hundert oder tausend Kilometer voneinander entfernt aufgestellt sind, solche meist über Telegraphie miteinander kommunizierenden Kurzwellen-Funknetzt bestehen meist aus einer Vielzahl von Einzelstationen, im Ausführungsbeispiel sind der Übersichtlichkeit halber nur drei Stationen gezeigt. Jede einzelne Sende-Empfangs-Station A, B und C besitzt einen Aufbau nach Fig. 2, d.h. sie besteht aus einem Kurzwellensender 1, der mit einer Sendeantenne S, beispielsweise einer logarithmisch periodischen Sendeantenne, verbunden ist und über ein Steuergerät 2 gesteuert ist. Jede Station besitzt außerdem einen Kurzwellenempfänger 3, der mit einer Empfangsantenne E verbunden ist und der ebenfalls über das Steuergerät 2 gesteuert ist. Die Empfangsantenne E besteht aus einer Gruppe von vorzugsweise aktiven Einzelantennen 4, die mit einem Netzwerk 5 verbunden sind, durch das auf elektronischem Wege in bekannter Weise ein drehbares Richtempfangsdiagramm R erzeugbar ist.

Die Rotation des Richtempfangsdiagrammes R längs der Pfeile 6 erfolgt wiederum gesteuert über das Steuergerät 2. Die Richtdiagramme R aller Stationen A, B und C rotieren winkelsynchron, d.h. sie sind zu jedem Zeitpunkt um den gleichen Winkel gegenüber Nord N gleich ausgerichtet. Die winkelsynchrone Rotation der Richtempfangsdiagramme erfolgt über die Uhrzeit, dazu ist in jeder Station zusätzlich noch ein Zeitzeichenempfänger 7 vorgesehen, der vorzugsweise ebenfalls über die Empfangsantenne E die Signale eines Zeitzeichensenders empfängt, daraus wird im Steuergerät 2 die genaue Uhrzeit abgeleitet und davon dann die winkelsynchrone Rotation durch entsprechende Steuerung des Netzwerkes 5 der Empfangsantenne E.

Dem Steuergerät 2 ist noch ein elektronischer Speicher 8 zugeordnet, in welchem die geographischen Ortskoordinaten aller Stationen A, B und C gespeichert sind, aus denen dann in dem Steuergerät 2 der jeweilige Azimutwinkel gegenüber N bestimmt wird, unter dem die eigene Station die andere Station sieht. Aus diesen im Speicher 8 gespeicherten Daten kann beispielsweise die Station A den Azimutwinkel β_{A} berechnen, unter dem die Station B anzurufen ist, ebenso den Winkel γ_{A}, unter welchem die Station C anzurufen ist. In gleicher Weise kennt die Station C die Azimutwinkel α_{C} und β_{C}, unter denen die Stationen A bzw. B anzurufen sind. In dem Speicher 8 sind neben diesen Ortskoordinaten bzw. diesen berechneten Azimutwinkeln auch noch andere Daten abgespeichert, die für einen Verbindungsaufbau zwischen den einzelnen Stationen nötig sind, beispielsweise die Anruffrequenzen bzw. Frequenzkanäle, die je nach Ortszeit und Entfernung für einen Verbindungsaufbau am geeignetsten sind, ferner die Rufzeichen der verschiedenen Stationen, die Zeiten, die für eine bestimmte Station für einen Anruf am günstigsten sind und dergleichen.

Will beispielsweise die Station A eine Verbindung mit der Station B aufbauen, so dreht sie ihre eigene Sendeantenne S um den Winkel β_{A} in Richtung Station B. Aus dem Azimutwinkel β_{A} und der Rotation des eigenen Richtempfangsdiagramms R weiß die Station A außerdem, daß das Richtempfangsdiagramm R der Station B dann genau in Richtung der rufenden Station A ausgerichtet ist, wenn die Rotation den Winkel β_{A} + 180°, also den Winkel α_{B} aus der Sicht der Station B erreicht. In diesem Zeitpunkt wird gesteuert über das Steuergerät 2 das Rufsignal über den Sender 1 der Station A und die Richtantenne S zur Station B ausgestrahlt und diese empfängt mit hohem Gewinn über die genau nach A ausgerichtete Richtempfangsantenne E das Rufsignal. Damit ist dann die Verbindung aufgebaut.

Der anschließende Kommunikationsbetrieb zwischen den beiden Stationen A und B kann dann in üblicher Weise über breitbandige Richtantennen erfolgen, indem die beiden Stationen sowohl ihre Sende- als auch Empfangs-Richtantenne entsprechend ausrichten. Eine andere Möglichkeit besteht darin, dafür unmittelbar die Richtwirkung der Empfangsantenne E auszunutzen. Dazu ist es nur erforderlich, die Zeit gemäß Fig. 3 in eine Anrufphase und in eine anschließende Kommunikationsphase zu unterteilen. In der Anrufphase unterbrechen alle Stationen ihre eventuell momentane Sendetätigkeit und nur noch die rufende Station sendet über die in Richtung gerufene Station gedrehte Sendeantenne S das Rufsignal. Die Richtdiagramme R der Empfangsantennen E aller Stationen rotieren während der Anrufphase wie beschrieben winkelsynchron. Ist dann wie beschrieben eine Verbindung aufgebaut, so kann in der anschließenden Kommunikationsphase das Richtempfangsdiagramm R der beiden zu kommunizierenden Stationen gesteuert über das Steuergerät 2 und das Netzwerk 5 jeweils stationär auf den jeweiligen Azimutwinkel der Gegenstation eingestellt werden, die Kommunikation zwischen den Stationen kann dann über die stationäre Richtwirkung der Empfangsantenne E durchgeführt werden, bis anschließend wieder kurz die Kommunikation unterbrochen und eine neue kurze Anrufphase für alle Stationen wirksam wird. Dieses Prinzip ist insbesondere für Funknetze geeignet, die Nachrichten in Form von Datenpaketen austauschen.

Für den Verbindungsaufbau ist nicht unbedingt eine kontinuierliche winkelsynchrone Rotation des Richtdiagrammes erforderlich, über das Netzwerk 5 kann gesteuert über das Steuergerät 2 das Richtdiagramm R der Empfangsantenne auch sprunghaft gedreht werden, wie dies für die Anrufphase in Fig. 3 für die Azimutwinkel 0°, 90°, 180° und 270° angedeutet ist. Diese sprunghafte Diagrammrotation mit 90°-Schritten ist besonders schnell und dann anwendbar, wenn die Breite des Richtdiagramms R entsprechend groß gewählt wird, damit auch Zwischenwerte mit ausreichendem Gewinn empfangen werden. Eine andere Möglichkeit besteht darin, das Richtdiagramm im Raster der jeweiligen Azimutwinkel der anderen Stationen springen und die dazwischenliegenden Winkelbereiche überspringen zu lassen. Dadurch kann bei gleichen Zeiträumen für den Anruf von jeder anderen station die Anrufphase und damit die Wartezeit bis zum nächstmöglichen Anruf verkürzt werden.

Diese sprunghafte Diagrammrotation mit kurzen stillstehenden Diagrammen ist nicht nur zum Verbindungsaufbau geeignet, sondern wäre auch unmittelbar geeignet zur Nachrichtenübertragung, insbesondere zur Übertragung von Nachrichten, die in Form von kurzen Datenpaketen ausgetauscht werden. In diesem Fall werden also die schrittweise rotierenden Richtantennen unmittelbar zur Nachrichtenübertragung ausgenutzt, was besonders dann von Vorteil ist, wenn nicht nur das Diagramm der Empfangsantennen elektronisch steuerbar ist, sondern auch die Sendeantennen mit elektronisch steuerbaren Richtdiagrammen ausgestattet sind.

Kurzwellenverbindungen arbeiten meist nicht nur mit einer einzigen Frequenz, meist stehen für eine Verbindung mehrere auf unterschiedlichen Frequenzen arbeitende Funkkanäle zur Verfügung. In diesem Fall muß die rufende Station in der Anrufphase für jede einzelne Winkelstellung ihrer Empfangsantenne zwischen allen für den Anruf vereinbarten Kanälen senden und zwar nach einem Schema, das allen Stationen bekannt ist, wobei zwischen bestimmten Stationen Funkkanäle in Frequenzbereichen vereinbart sein können, die aufgrund geographischer und ausbreitungsbedingter Verhältnisse eine besonders gute Verbindung erwarten lassen.

Eine weitere Verbesserung der Kommunikation ergibt sich, wenn die Sendeantenne S ebenfalls aus einer Antennengruppe mit einem elektronisch steuerbaren Richtnetzwerk gebildet ist. Denn mit solch einer Sendeantenne läßt sich auch die Senderichtung sehr schnell umschalten und damit die Zeit bis zur Antwort auf einen Anruf verkürzen.

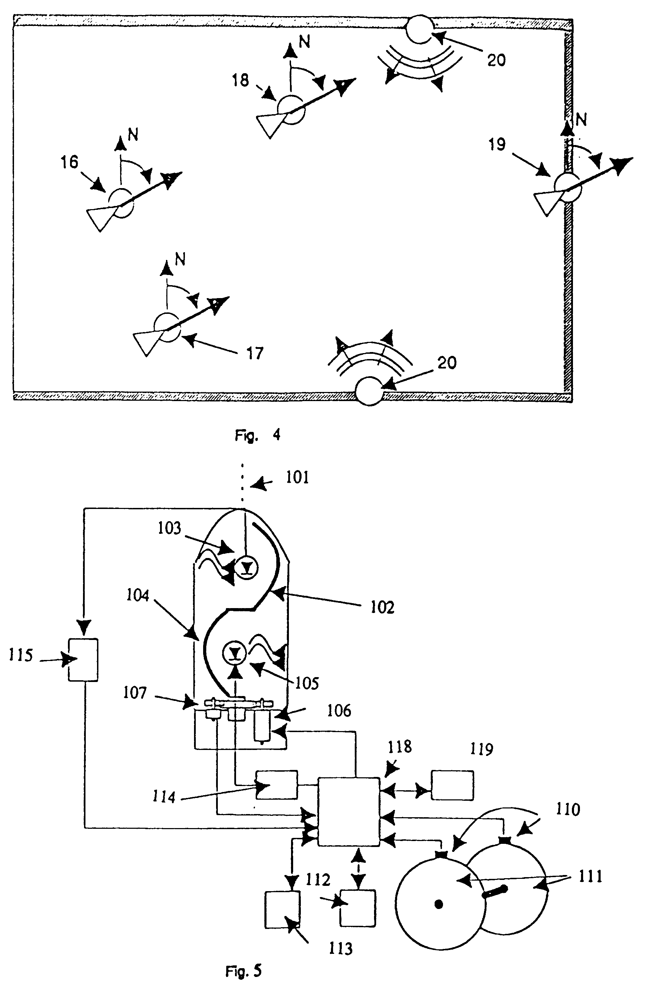

Fig. 4 zeigt die Draufsicht auf eine Fabrikhalle, in welcher insgesamt drei fahrerlose Fahrzeuge 16, 17 und 18 bewegt werden, die miteinander kommunizieren sollen. Dazu wird eine direkte Licht-Sichtverbindung mit einer in Fig. 5 näher dargestellten Sende-Empfangs-Einrichtung auf jedem der Fahrzeuge benutzt. Auf jedem der fahrerlosen Transportfahrzeuge 16, 17, 18 ist eine solche Sende-Empfangseinrichtung installiert. Auf einer über einen Motor 106 im Azimuth gedrehten vertikalen Rotationsachse 101 sind zwei in entgegengesetzter Richtung ausgerichtete Hohlspiegel 102 und 104 angebracht, im Brennpunkt des einen Spiegels 102 ist eine Photodiode 103 als Empfangselement angeordnet, die mit einem Empfänger 115 verbunden ist, im Brennpunkt des anderen Spiegels 104 ist eine Leuchtdiode 105 angeordnet, die über einen Sender 114 gespeist ist. Die beiden Spiegel 102 und 104 werden gemeinsam über den Motor 106 um die Achse 101 gedreht, und zwar ist die Rotation der Spiegel sämtlicher Fahrzeuge synchronisiert, so daß alle Sendespiegel 104 in jedem Moment in die gleiche Richtung weisen und damit gleichzeitig auch alle Empfangsspiegel 102 um 180° versetzt in Richtung auf die Sendespiegel der anderen Fahrzeuge ausgerichtet sind. Damit ist gewährleistet, daß während der Rotation jedes Fahrzeug stets in dieselbe Richtung im Raum sendebereit und aus der Gegenrichtung auch empfangsbereit ist. Die Synchronisation erfolgt vorzugsweise über die jeweils aktuelle Uhrzeit, der Mikroprozessor 108 vergleicht den jeweils momentanen Winkelwert der Drehachse 101, der über einen Winkelgeber 107 ermittelt wird, mit einem Sollwert, der über einen vorgegebenen zeitlichen Zusammenhang an Hand der aktuellen Uhrzeit im Mikroprozessor ermittelt wird. Dazu ist in jeder Sende-Empfangseinrichtung jedes Fahrzeugs eine Normaluhr 109 vorgesehen. Diese Uhren 109 der einzelnen Fahrzeuge sind durch Synchronsignale miteinander synchronisiert, die beispielsweise von einer Rundstrahl-Bake 20 oder von einem der Fahrzeuge ausgestrahlt werden. Der Zusammenhang kann beispielsweise darin bestehen, daß zu jeder vollen Sekunde der Sendespiegel genau nach Norden und der Empfangsspiegel genau nach Süden ausgerichtet ist. Damit die so vorgegebene Richtung auch bei Drehungen des Fahrzeugs erhalten bleibt, werden vorzugsweise über den Mikroprozessor 108 gleichzeitig auch noch aktuelle Richtungsänderungen des Fahrzeugs selbst ermittelt, beispielsweise mittels Radsensoren 110, wobei der Umstand ausgenutzt wird, daß parallele Räder 111 eines Fahrzeugs sich nur bei Geradeausfahrt gleich schnell drehen und daß aus unterschiedlichen Drehgeschwindigkeiten der Räder 111 auf die Drehgeschwindigkeit des Fahrzeugs um seine vertikale Achse geschlossen werden kann. Aus diesen Informationen kann dann die Synchronisation der Spiegel entsprechend korrigiert werden, und zwar entweder durch Beschleunigung oder Verzögerung des Drehantriebes 106.

Die Empfangseinrichtung 102, 103, 115 ist ständig empfangsbereit, so daß der Mikroprozessor 108 die Position und Ausrichtung seines eigenen Fahrzeuges ständig überprüfen kann. Dazu sind gemäß Fig. 4 zwei festinstallierte ungerichtet abstrahlende Baken 20 vorgesehen, die jeweils ein ihre Position innerhalb des Raumes wiedergebendes Datensignal abstrahlen. Im Mikroprozessor 108 wird bestimmt, bei welcher Winkelstellung seines Empfangsspiegels 102 die jeweilige Bake 20 empfangen wird, durch eine Triangulationsberechnung aus den beiden Winkelwerten, mit denen die beiden Baken gepeilt werden, kann dann genau der jeweils momentane Standort des peilenden Fahrzeugs berechnet und in einem Speicher 113 abgespeichert werden. Diese von jedem Fahrzeug selbst bestimmte momentane Position wird an alle anderen Fahrzeuge weitergegeben und in den dortigen Speichern 112 ebenfalls abgespeichert, so daß jedes Fahrzeug zumindest jeweils die Richtung kennt, in welcher momentan alle übrigen Fahrzeuge gegenüber dem eigenen Fahrzeug stehen. Damit ist es möglich, daß der Sender 114 nur dann eine Nachricht abstrahlt, wenn der Sendespiegel 104 auch tatsächlich auf ein Fahrzeug ausgerichtet ist, dem eine Nachricht übermittelt werden soll.

Wenn ein Fahrzeug eine Nachricht zu einem anderen Fahrzeug oder zu einer stationären Sendeempfangsstation 19 senden will, dann wird im Mikroprozessor 108 jeweils aus der momentanen eigenen Position und der abgespeicherten Position des Zielfahrzeuges der Winkel berechnet, unter dem das Sendefahrzeug die Nachricht abstrahlen muß. Wenn der rotierende Sendespiegel 104 diesen errechneten Winkel erreicht, wird über den Winkelgeber 7 und den Mikroprozessor 108 die Aussendung der Nachricht über den Sender 114 eingeleitet. Aus Fig. 4 ist ersichtlich, daß der Sendestrahl des Fahrzeugs 16 in diesem Moment auf den Empfangsspiegel 102 des Fahrzeuges 18 genau ausgerichtet ist, in diesem Moment also eine Nachricht vom Fahrzeug 16 zum Fahrzeug 18 übertragen werden kann, während für eine Nachrichtenübertragung vom Fahrzeug 16 zum Fahrzeug 17 noch etwa ein Drittel Spiegelrotation gewartet werden muß.

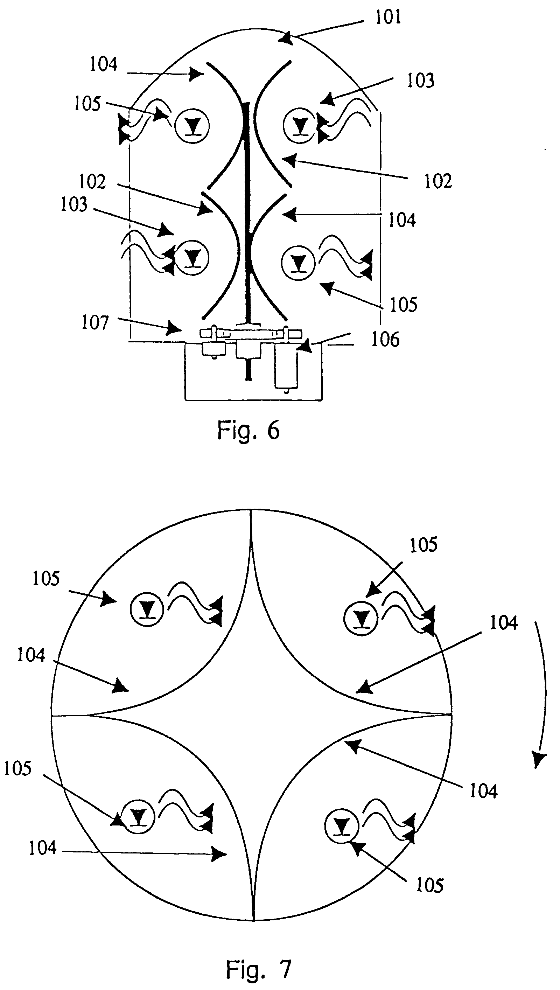

Anstelle der Doppel-Spiegelanordnung nach Fig. 5 ist auch eine 4-fach-Spiegelanordnung nach Fig. 6 möglich, mit einer solchen Zweifach-Doppelspiegelanordnung ist ein Vollduplexbetrieb möglich, da aus der gleichen Richtung, in welcher jeweils der eine Richtstrahler abstrahlt, gleichzeitig über den anderen Empfangsstrahler empfangen werden kann. Auch die Zeitpunkte, zu denen je Vollumdrehung mit einem Nachbar kommuniziert werden kann, werden damit verdoppelt. Durch weitere Richtstrahler, die in einem festen Azimuthwinkel gegenüber anderen Richtstrahlern gedreht sind, läßt sich die Kommunikationshäufigkeit auf Kosten eines erhöhten Aufwandes weitersteigt, wie dies die Draufsicht nach Fig. 7 zeigt, hier sind vier Sendespiegel 104 jeweils um 90° gegeneinander versetzt um die Drehachse angeordnet, in dieser Draufsicht nach Fig. 7 darunter in einer zweiten Ebene ähnlich wie in Fig. 6 sind weitere vier, jeweils um 90° versetzte Empfangsspiegel 102 vorgesehen, dadurch kann also die Kommunikationshäufigkeit verachtfacht werden.

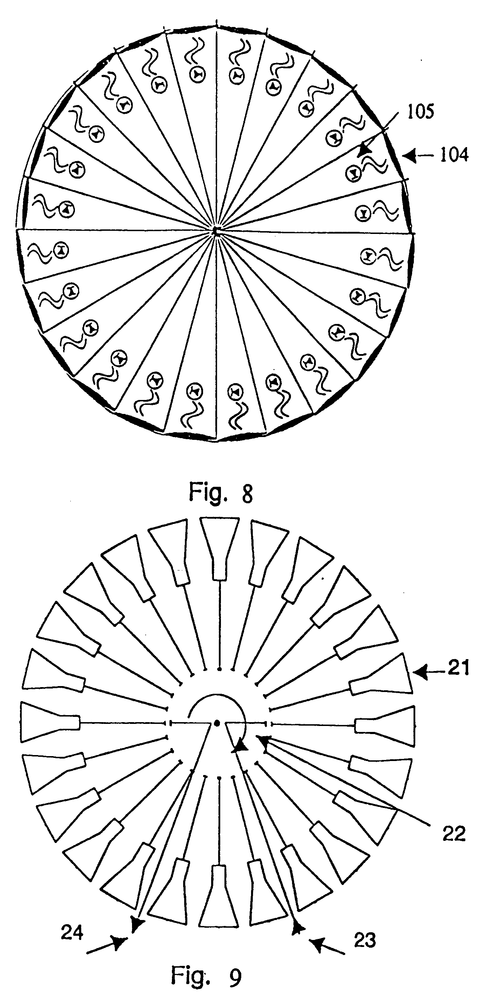

Fig. 8 zeigt die Möglichkeit einer nur simulierten Rotation eines Richtstrahles mittels eine Vielzahl von kranzförmig angeordneten feststehenden Senderichtstrahler 104 die Empfangsrichtstrahlanordnung ist in gleicher Weise ausgebildet. Mit der stationären Anordnung nach Fig. 8 ist ohne bewegte Teile die Erzeugung eines rotierenden Richtstrahles möglich, indem schrittweise nacheinander die aufeinanderfolgenden Leuchtdioden 105 aktiviert werden. Mit dieser simulierten elektronischen Rotation ist eine höhere Rotationsgeschwindigkeit möglich, als mit einer mechanisch gedrehten Anordnung beispielsweise nach Fig. 5, die Nachrichtenübertragung zwischen den Fahrzeugen kann damit in viel kürzerer Zeit durchgeführt werden. In Fig. 8 sind die optischen Richtstrahler 104 mit Linsen aufgebaut, auch eine Anordnung mit Laserstrahlern oder Spiegel wäre denkbar.

In gleicher Weise ist auch eine simulierte Richtstrahlrotation mit Richtantennen im Mikrowellenbereich gemäß Fig. 9 möglich, hier ist eine Vielzahl von Sende/Empfangsantennen 21 kranzförmig um einen Kommutator 22 angeordnet, der die Antennen 21 nacheinander an einen Signaleingang 23 und in entgegengesetzter Richtung an einen Signalausgang 24 anschaltet, so daß mit nur einem Antennenkranz nach Fig. 9 gleichzeitig der rotierende Senderichtstrahler und der rotierende Empfangsrichtstrahler wirksam ist. Eine solche geschaltete simulierte Rotation nach den Fig. 8 und 9 besitzt die Möglichkeit, daß die aneinander anschliessenden Azimuthsektoren nicht nur in der durch die mechanische Anordnung vorgegebenen Reihenfolge ungeschaltet werden können, sondern in jeder beliebigen Reihenfolge, sofern diese nicht der Reihe nach erfolgende Umschalten der einzelnen Richtstrahler in allen Fahrzeugen in gleicher Weise durchgeführt wird. So könnte beispielsweise bei der Anordnung nach Fig. 9 beim rotierenden Abtasten immer eine der kranzförmig angeordneten Antennen ausgelassen werden, wenn dies fuhr spezielle Zwecke sinnvoll ist.

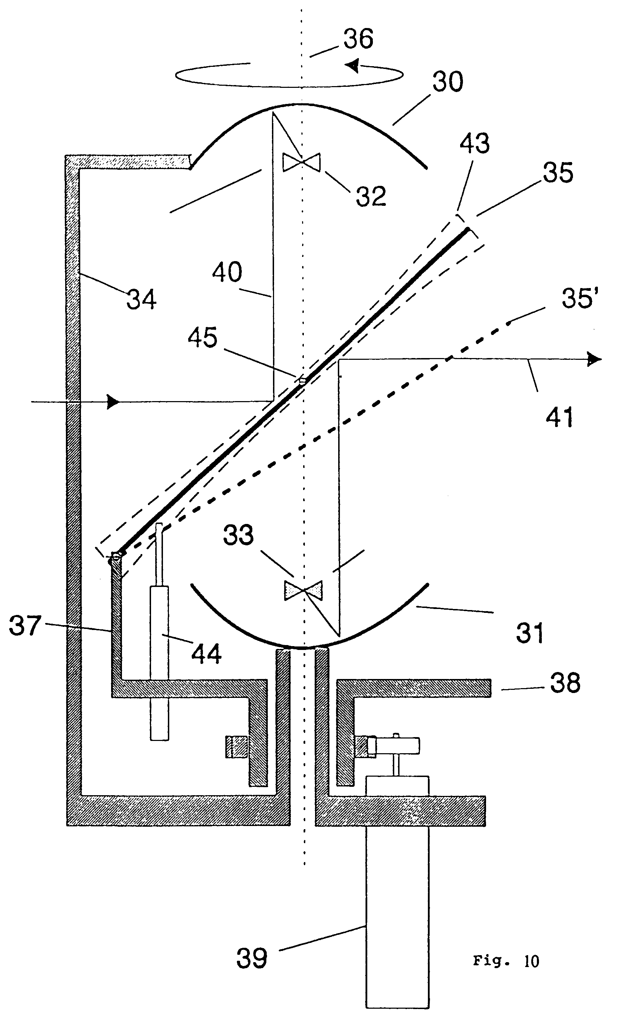

Fig. 10 zeigt eine weitere Möglichkeit für den Aufbau einer rotierenden Doppelrichtstrahl-Anordnung mit zwei in entgegengesetzter Richtung um 180° versetzt strahlenden Richtstrahlern und mechanischer Rotation der so erzeugten Richtstrahlen, wie sie beispielsweise anstelle der rotierenden Richtstrahl-Anordnung nach Fig. 5 bei einem Kommunikationssystem benutzbar ist, aber auch genauso gut für andere Zwecke benutzt werden kann, bei denen es darauf ankommt, mit möglichst geringen rotierenden Massen zu arbeiten und eine einfache Möglichkeit zum Einstellen der Elevation zu schaffen. Fig. 10 zeigt in Seitenansicht eine Doppelrichtstrahl-Anordnung mit zwei im Abstand gegenüberliegend angeordneten feststehenden Richtstrahlern 30 und 31, in dem gezeigten Ausführungsbeispiel sind diese als Mikrowellen-Reflektorantennen mit einem elektrischen Erreger 32, 33 im Brennpunkt ausgebildet. Die beiden Richtstrahler 30, 31 sind über ein Gestell 34 feststehend beispielsweise auf einem Fahrzeug (Schiff) angeordnet. Zwischen diesen feststehend und in Richtung aufeinander zu ausgerichteten Richtstrahlern 30, 31 ist ein Reflektor 35 angeordnet, beispielsweise in Form einer flachen ebenen Metallplatte. Dieser Reflektor 35 ist in einem Winkel von 45° gegenüber der Verbindungsachse 36 der beiden vertikal übereinander angeordneten Richtstrahler 30, 31 schräggestellt und er ist beispielsweise über eine Stütze 37 an einem Drehteller 38 befestigt, der über einen Motor 39 um die Vertikalachse 36 gedreht wird. Die Speisung der feststehenden Erreger 32, 33 erfolgt über übliche feststehend montierte Hochfrequenzspeiseeinrichtungen. Bei rotierendem Reflektor 35 werden die von den Erregern 32, 33 abgestrahlten bzw. mit diesen empfangenen Strahlen gemäß den Strahlengängen 40, 41 auf beiden Seiten des Reflektors 35 umgelenkt und so ein rotierendes horizontales Richtdiagramm mit zwei um 180° gegeneinander versetzten Richtstrahlen erzeugt. In dem dargestellten Beispiel ist der obere Richtstrahler 30 bei Verwendung in einem Kommunikationssystem nach Fig. 5 als Empfangsrichtstrahler und der Richtstrahler 31 als Senderichtstrahler ausgebildet.

Anstelle eines ebenen flachen Reflektors 35 könnte auch ein beidseitig gekrümmter flacher Parabolreflektor 43 benutzt werden, wie dies gestrichelt in Fig. 10 dargestellt ist, dadurch könnten spezielle Diagrammformen erzeugt werden.

Die erfindungsgemäße Reflektoranordnung ermöglicht es auch auf einfache Weise, die Elevation der in horizontaler Richtung abgestrahlten Richtstrahlen zu ändern, dazu ist es nur erforderlich, den Winkel zwischen dem schräg stehenden Reflektor 35 und der Rotationsachse 36 zu ändern. Dies kann in dem gezeigten Ausführungsbeispiel mit seitlich über eine Stütze 37 am Drehteller 38 gehaltenen Reflektor 35 beispielsweise mit einer einfachen Hubeinrichtung 44 durchgeführt werden, mit welcher die Schrägstellung des Reflektors veränderbar ist, wie dies durch die Schrägstellung 35' in Fig. 10 gestrichelt dargestellt ist. Bei dieser Möglichkeit der Änderung der Elevation ändert sich auch die Lage des Mittelpunktes des Reflektors 35. Wenn dies beispielsweise bei Verwendung eines doppelseitigen Parabolspiegels 43 unerwünscht ist, muß dafür gesorgt werden, daß der Reflektor um seine Mittelachse 45 kippbar ist, die Änderung des Schrägwinkels um diese Kippachse 45 kann dann wieder über eine Hubeinrichtung 44 erfolgen, die wieder am Rand des Reflektors angreift. Eine derartige Einstellmöglichkeit für die Elevation ist beispielsweise dann von Vorteil, wenn die Antennenanordnung nach Fig. 10 auf einem Fahrzeug, beispielsweise auf einem Schiff, angeordnet ist, bei dem die Drehachse 36 nicht immer vertikal ausgerichtet ist, indem sie beispielsweise auf einem nicht lotrecht angeordneten Mast befestigt ist. In diesem Fall kann während der Rotation des Reflektors durch kontinuierliche Veränderung des Schrägwinkels die durch diese Schräglage des Antennensystems erzeugte Elevationsänderung ausgeglichen werden, dies kann bei Anwendung in einem Kommunikationssystem nach Fig. 5 beispielsweise wiederum gesteuert durch den Mikroprozessor in Abhängigkeit von der jeweiligen Drehstellung erfolgen.

Das erfindungsgemäße System ist nicht auf den Träger Licht eingeschränkt sondern kann in gleicherweise mit gleichem Erfolg auch bei Mikrowellenverbindungen mit entsprechenden Richtstrahlantennen eingesetzt werden, sofern die Wellenlänge so kurz ist, daß der Reflektor einen hinreichend schmalen Strahl formen kann. Auch mit Ultraschallwellen und entsprechenden Schallreflektoren ist das erfindungsgemäße System anwendbar.

## Patentansprüche

1. System zur Kommunikation zwischen zwei Sende-Empfangs-Stationen eines aus mehreren solchen Sende-Empfangs-Stationen (A, B, C; 16, 17, 18) bestehenden Nachrichten-Übertragungsnetzes
**dadurch gekennzeichnet**,
daß mindestens die Empfangsstrahlen der Stationen (A, B, C; 16, 17, 18) Richtstrahlen sind, deren Richtempfangsdiagramme (R) gesteuert über eine Steuervorrichtung winkelsynchron rotieren, wobei jeder Steuereinrichtung ein Speicher zugeordnet ist, in dem das Ablaufschema der synchronen Rotation und die Daten der jeweils momentanen Standorte der einzelnen Stationen (A, B, C; 17, 17, 18) gespeichert sind, und die jeweils sendende Station der beiden miteinander kommunizierenden Stationen nur dann sendet, wenn das rotierende Richtempfangsdiagramm (R) der zugehörigen anderen Station auf diese Sendestation ausgerichtet ist.

2. System nach Anspruch 1 zum Aufbau einer Kurzwellenverbindung zwischen zwei Sende-Empfangs-Stationen (A, B, C) eines Funknetzes mit mehreren an bekannten Orten stationierten Sende-Empfangs-Stationen, bei dem der Sender (1) der eine Verbindung wünschenden Station (z.B. A) einen Ruf sendet, bis diesen der Empfänger (3) der gerufenen Station (z.B. B) empfängt,
**dadurch gekennzeichnet**,
daß die Empfangsantennen der Stationen (A, B, C) Richtantennen (E) sind, deren Richtempfangsdiagramme (R) winkelsynchron rotieren, in jeder Station (A, B, C) ein Speicher (8) vorgesehen ist, in dem das Ablaufschema der Rotation und die Azimutwinkel (α, β, γ) zu den anderen Stationen gespeichert sind und die rufende Station ihren Ruf nur dann aussendet, wenn das rotierende Richtempfangsdiagramm (R) der angerufenen Station auf die rufende Station ausgerichtet ist.

3. System nach Anspruch 2,
**dadurch gekennzeichnet**,
daß die rufende Station (z.B. A) ihren Ruf mit einer auf die gerufene Station (z.B. B) ausgerichteten Richtantenne (S9 sendet.

4. System nach Anspruch 2 oder 3
**dadurch gekennzeichnet**,
daß nach Aufbau der Verbindung die Kommunikation zwischen den Stationen mittels aufeinander ausgerichteten Richtempfangs- und Richtsende-Antennen erfolgt.

5. System nach einem der vorhergehenden Ansprüche,
**dadurch gekennzeichnet**,
daß die Richtempfangsdiagramme (R) der Empfangsantenne (E) nur während einer vorbestimmten Anrufphase winkelsynchron rotieren und nach Aufbau der Verbindung während einer anschließenden Kommunikationsphase das Richtempfangsdiagramm (R) der Empfangsantennen (E) jeweils auf die Gegenstation stationär ausgerichtet bleibt.

6. System nach einem der vorhergehenden Ansprüche,
**dadurch gekennzeichnet**,
daß die Richtempfangsdiagramme (R) der Empfangsantennen (E) zwischen vorbestimmten Winkelwerten (0°, 90°, 180°, 270°; Azimutwinkel der Gegenstationen) sprunghaft umgeschaltet werden.

7. System nach einem der vorhergehenden Ansprüche,
**dadurch gekennzeichnet**,
daß die Empfangsantennen (E) aus in einem Richtantennen-Netzwerk zusammengeschalteten aktiven Einzelantennen bestehen und das Richtempfangsdiagramm (R) durch elektronische Steuerung des Richtantennennetzwerkes drehbar ist.

8. System nach einem der vorhergehenden Ansprüche,
**dadurch gekennzeichnet**,
daß im Speicher (8) jeder Station zusätzlich auch noch die Daten zur Bestimmung des optimalen Zeitpunktes für einen Anruf der anderen Stationen gespeichert sind.

9. System nach einem der vorhergehenden Ansprüche,
**dadurch gekennzeichnet**,
daß im Speicher (8) die geographischen Ortskoordinaten aller Stationen gespeichert sind und daraus der jeweilige Azimutwinkel berechnet wird.

10. System nach Anspruch 1, insbesondere für fahrerlose Fahrzeuge
**dadurch gekennzeichnet**,
daß auch die Sendeantennen der Stationen (A, B, C) Richtantennen (S) sind, die jeweils um einen vorbestimmten Winkel gegenüber den Empfangsrichtantennen (E) versetzt sind und ein Sender einer Station (A, B, C) gesteuert über die Steuervorrichtung nur dann sendet, wenn seine Sendericht-Antenne (S) auf die Gegen-Empfangsstation ausgerichtet ist, deren Empfangsrichtantenne (E) im gleichen Moment auf diese Sendestation ausgerichtet ist.

11. Kommunikationssystem für insbesondere fahrerlose Fahrzeuge,
**dadurch gekennzeichnet**,
daß die Verbindung der einzelnen Fahrzeuge über Richtstrahler (102, 104) erfolgt, jedes Fahrzeug mindestens einen rotierenden Sende-Richtstrahler (14) und mindestens einen um einen vorbestimmten Winkel gegenüber dem Senderichtstrahler (102) versetzten und synchron mit diesem rotierenden Empfangsrichtstrahler (102) aufweist, jede Sende-Empfangs-Einrichtung einen Speicher (112) aufweist, in welchem die jeweils momentane Richtung der anderen Fahrzeuge gespeichert ist, und jeder Sende-Richtstrahler (104) gesteuert über einen mit dem Speicher (112) verbundenen Mikroprozessor (108) nur dann sendet, wenn er während seiner Rotation auf das gleiche Moment mit seinem Empfangsrichtstrahler (102) auf ihn weisende Zielfahrzeug ausgerichtet ist.

12. System nach Anspruch 11,
**dadurch gekennzeichnet**,
daß den zusammen rotierenden Richtstrahlern (102, 104) ein den jeweils momentanen Drehwinkel bestimmender Winkelgeber (107) zugeordnet ist, der mit dem Mikroprozessor (108) verbunden ist.

13. System nach Anspruch 11 oder 12,
**dadurch gekennzeichnet**,
daß im Speicher (112) jeder Sende-Empfangseinrichtung jeweils der momentane Standort aller anderen Fahrzeuge gespeichert ist.

14. System nach einem der Ansprüche 11 bis 13,
**dadurch gekennzeichnet**,
daß die Rotation der Richtstrahler der einzelnen Fahrzeuge über die Uhrzeit synchronisiert ist.

15. System nach einem der Ansprüche 11 bis 14,
**dadurch gekennzeichnet**,
daß bei der Synchronisation der Rotation auch aktuelle Richtungsänderungen des eigenen Fahrzeugs berücksichtigt sind (Radsensor 110).

16. System nach einem der Ansprüche 11 bis 15,
**dadurch gekennzeichnet**,
daß im Bewegungsgebiet der Fahrzeuge mindestens zwei feststehende Rundstrahl-Sendebaken (20) vorgesehen sind, die ein ihren Standort beschreibendes Datensignal aussenden, und im Mikroprozessor (108) aus der auf die Baken (20) ausgerichteten Drehstellung des Empfangsrichtstrahlers (102) jeweils der momentane eigene Standort des Fahrzeugs bestimmt und im Speicher (112) abgespeichert wird.

17. System nach einem der Ansprüche 11 bis 16,
**dadurch gekennzeichnet,**
daß auf einer am Fahrzeug angebrachten Rotationsvorrichtung (6) senkrecht zu der vertikalen Drehachse (106) ein Senderichtstrahler (104) und ein demgegenüber um 180° versetzter Empfangsrichtstrahler (102) angebracht ist.

18. System nach einem der Ansprüche 11 bis 17,
**dadurch gekennzeichnet**,
daß auf der Rotationseinrichtung (6) zwei jeweils um 180° gegeneinander versetzte Senderichtstrahler (102) und zwei ebenfalls um 180° gegeneinander versetzte Empfangsrichtstrahler (102) angebracht sind und die Richtung der Senderichtstrahler mit den Richtungen der Empfangsrichtstrahler jeweils gleich ist (Fig. 6).

19. System nach einem der Ansprüche 11 bis 18,
**dadurch gekennzeichnet**,
daß auf der Rotationseinrichtung (6) insgesamt vier um 90° gegeneinander versetzte Senderichtstrahler und vier um 90° versetzte Empfangsrichtstrahler angebracht sind (Fig. 7).

20. System nach einem der Ansprüche 11 bis 19,
**dadurch gekennzeichnet**,
daß zur Nachrichtenübertragung ein Lichtstrahl benutzt wird und die Richtstrahler als optische Strahler ausgebildet sind.

21. System nach einem der Ansprüche 11 bis 20,
**dadurch gekennzeichnet**,
daß die Verbindung als Mikrowellen-Richtstrecke ausgebildet ist und die Richtstrahler Richtantennen sind.

22. System nach einem der Ansprüche 11 bis 21,
**dadurch gekennzeichnet**,
daß die Sendeempfangseinrichtung einen Zwischenspeicher (113) zum Zwischenspeichern von an andere Fahrzeuge weitergebende Nachrichten aufweist.

23. Rotierende Doppelrichtstrahl-Anordnung, insbesondere für ein Kommunikationssystem nach einem der vorhergehenden Ansprüche 10 bis 22,
**gekennzeichnet durch**
zwei vertikal im Abstand feststehend angeordnet und in Richtung aufeinander zu ausgerichtete Richtstrahler (30, 31) sowie einen zwischen diesen angeordneten, um die vertikale Verbindungsachse (36) der beiden Richtstrahler rotierenden, beidseitig reflektierenden und gegenüber der vertikalen Rotationsachse (36) sehräggestellten Reflektor (35, 43), durch den die Richtstrahlen (40, 41) der beiden Richtstrahler (30, 31) jeweils in entgegengesetzter Richtung horizontal rotierend abgestrahlt werden.

24. Dopelrichtstrahl-Anordnung nach Anspruch 23,
**dadurch gekennzeichnet**,
daß der feststehenden Richtstrahler-Einheit (30 bis 34) eine mechanische Drehvorrichtung (38, 39) zugeordnet ist, mittels welcher der schrägstehende Reflektor (35, 43) um die vertikale Drehachse (36) drehbar ist.

25. Doppelrichtstrahl-Anordnung nach Anspruch 24,
**dadurch gekennzeichnet**,
daß der Drehvorrichtung (38, 39) eine Hubvorrichtung (44) zum Verändern des Winkels zwischen dem schrägstehenden Reflektor (35, 43) und der vertikalen Drehachse (36) zugeordnet ist.
